# EUROPEAN PATENT APPLICATION

(11) **EP 2 420 919 A2**
(43) Date of publication of application: **22.02.2012**
(21) Application number: 11175862.9
(22) Date of filing: 28.07.2011
(51) Int. Cl.: G06F 3/041, G06F 3/044

(54) **Liquid crystal display integrated touch screen panel**

(30) Priority: 19.08.2010 KR 20100080275
(71) Applicant: Samsung Mobile Display Co., Ltd., Yongin-City Gyunggi-do (KR)
(72) Inventor: Lee, Jin-Hee, Chungcheongnam-do (KR); Pak, Sang-Jin, Chungcheongnam-do (KR); Yoshimura, Hideo, Chungcheongnam-do (KR); Bum-Joon, Kim, Chungcheongnam-do (KR); Sang-Kwon, Ha, Chungcheongnam-do (KR); Jin-Woo, Park, Chungcheongnam-do (KR); Joo-Hyung, Lee, Chungcheongnam-do (KR)
(74) Representative: Mounteney, Simon James

(57) **Abstract**

A touch screen panel integrated liquid crystal display device in which a mutual capacitive touch screen panel is integrated with a liquid crystal display panel . The device includes a first substrate, a plurality of pixels on the first substrate and including respective pixel electrodes, a second substrate facing the first substrate, a common electrode on a first surface of the second substrate facing the pixel electrodes, a plurality of sensor electrodes on a second surface of the second substrate and including a plurality of transparent pairs extending in a first direction and having a plurality of protrusions extending in a second direction crossing the first direction, and a liquid crystal layer between the substrates, wherein the device senses a touch position by detecting a change of capacitance applied to the sensor electrodes corresponding to an alternating current common voltage applied to the common electrode.

## Description

### 1. Field

The present invention relates to a liquid crystal display device and a touch screen panel for a liquid crystal display device .

### 2. Description of Related Art

A touch screen panel is an input device that enables a person to use his/her finger and/or a tool to select an instruction displayed on a screen of an image display device and/or to input a user command.

To this end, the touch screen panel is provided at a front face of the image display device, and converts a contact position on the screen with a finger or a tool into an electrical signal. By doing so, an instruction selected at the contact position is input as an input signal.

The touch screen panel may enable the use of an increased range of applications, because the touch screen panel can be a substitute for separate input devices, such as a keyboard and a mouse, that are coupled to an image display device.

### SUMMARY

When a touch screen panel is fabricated separately from, and is attached to an outer surface of, an image display device, such as a liquid crystal display device, overall thickness of the image display device is increased, visibility of an image might be deteriorated, and manufacturing time and manufacturing costs are also increased.

The present invention sets out to overcome such problems of the prior art.

In order to achieve the foregoing and/or other aspects of the present invention, according to an embodiment of the present invention, there is provided a touch screen panel integrated liquid crystal display device including a first substrate, a plurality of pixels on the first substrate and including respective pixel electrodes, a second substrate facing the first substrate, a common electrode on a first surface of the second substrate facing the pixel electrodes, a plurality of sensor electrodes on a second surface of the second substrate and including a plurality of transparent pairs extending in a first direction and having a plurality of protrusions extending in a second direction crossing the first direction, and a liquid crystal layer between the first substrate and the second substrate, wherein the touch screen panel integrated liquid crystal display device is configured to sense a touch position by detecting a change of capacitance applied to the sensor electrodes corresponding to an alternating current common voltage applied to the common electrode.

Each of the transparent pairs may include a first pattern extending from a first end to a second end opposite the first end in the first direction, a width of the first pattern gradually decreasing toward the second end, and a second pattern extending from the first end to the second end in the first direction, a width of the second pattern gradually increasing toward the second end.

The first and second patterns may each have a triangular shape and may be substantially symmetrical to each other.

The protrusions may be formed in the respective transparent patterns and may be substantially uniformly spaced.

The transparent pairs may be substantially symmetrical to each other and may have a substantially triangular pattern including the protrusions to be comb-shaped.

A sensing signal for detecting the change of capacitance through detecting lines coupled to the sensor electrodes, may be supplied corresponding to a time when the alternating current common voltage is changed.

The device may be configured to supply the sensing signal in synchronization with a rising time and a falling time of the alternating current common voltage.

The device may be configured to supply the sensing signal in synchronization with a rising time or a falling time of the alternating current common voltage.

The device may be configured to supply the sensing signal in synchronization with modifying times of the alternating current common voltage distributed at regular intervals one frame.

The change of capacitance applied to the sensor electrodes may be detected concurrently through all detecting lines coupled to respective sensor electrodes during a sensing time corresponding to a time when the alternating current common voltage is changed.

The sensor electrodes may be alternately arranged.

According to embodiments of the present invention, the touch screen panel is integrated with a liquid crystal display panel so that a thin touch screen panel integrated liquid crystal display device is provided.

In addition, the common electrode of the liquid crystal display panel is used as the driving electrode of the touch screen panel to realize a mutual capacitive touch screen panel so that the electrode structure of the touch screen panel is simplified. The simplified electrode structure is adopted by a sensor electrode of the touch screen panel by forming a plurality of incisions (e.g., gaps) in the sensor electrode so that a touch screen panel integrated liquid crystal display device having improved productivity and sensitivity is provided.

At least some of the above and other features of the invention are set out in the claims.

Embodiments of the present invention therefore enable the provision of a touch screen panel integrated liquid crystal display device having a reduced thickness by integrating a touch screen panel with a liquid crystal display panel, and improve productivity by simplifying an electrode structure of the touch screen panel to improve touch sensitivity.

### BRIEF DESCRIPTION OF THE DRAWINGS

The accompanying drawings, together with the description, illustrate embodiments of the present invention, and, serve to explain aspects of the present invention.

FIG. 1 is a sectional view illustrating main parts of a touch screen panel integrated liquid crystal display device according to an embodiment of the present invention;

FIG. 2 is a view illustrating an equivalent circuit of a pixel of the embodiment shown in FIG. 1;

FIG. 3 is a plan view schematically illustrating an example of a common electrode and a sensor electrode of the embodiment shown in FIG. 1;

FIG. 4A is a sectional view illustrating an electric field generated between a common electrode and a sensor electrode when a touch input is not provided;

FIG. 4B is a sectional view illustrating an electric field generated between a common electrode and a sensor electrode when a touch input is provided; and

FIGS. 5A and 5B are timing diagrams schematically illustrating driving signals according to embodiments of the touch screen panel.

### DETAILED DESCRIPTION

In the following detailed description, only certain embodiments of the present invention have been shown and described, simply by way of illustration. As those skilled in the art would realize, the described embodiments may be modified in various different ways, all without departing from the scope of the present invention. Accordingly, the drawings and description are to be regarded as illustrative in nature, and not restrictive. In addition, when an element is referred to as being "on" another element, it can be directly on the another element or can be indirectly on the another element with one or more intervening elements interposed therebetween. Also, when an element is referred to as being "coupled to" another element, it can be directly coupled to the another element or can be indirectly coupled to the another element with one or more intervening elements interposed therebetween. Hereinafter, like reference numerals refer to like elements.

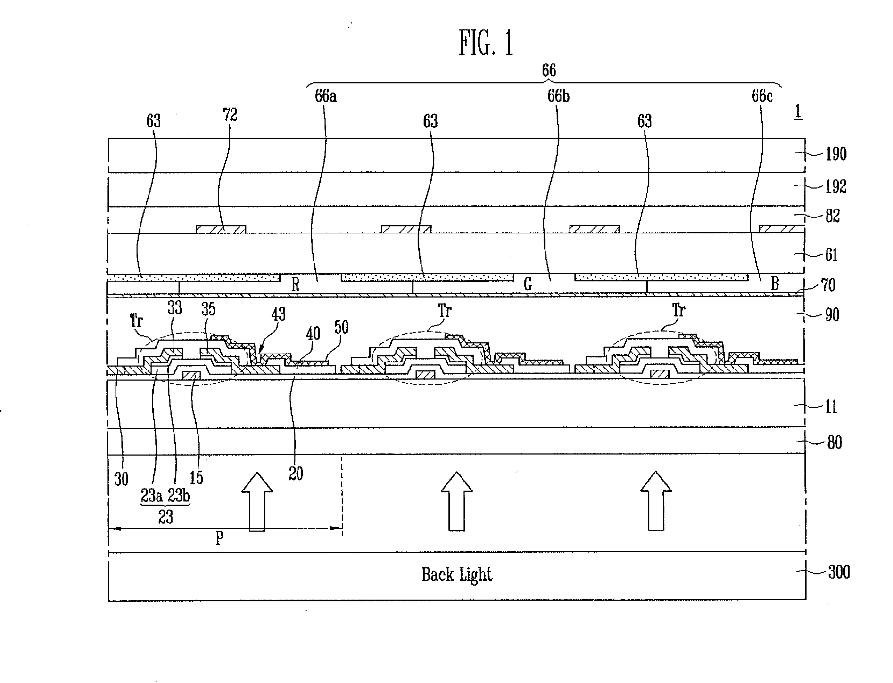

Hereinafter, embodiments by which those skilled in the art may practice the present invention will be described in detail with reference to FIGS. 1 to 5B.

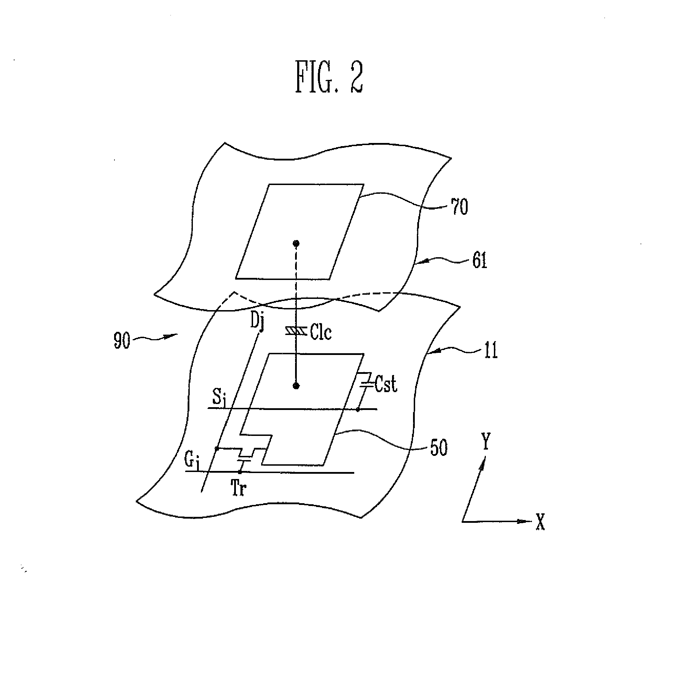

FIG. 1 is a sectional view illustrating main parts of a touch screen panel integrated liquid crystal display device according to an embodiment of the present invention. FIG. 2 is a view illustrating an equivalent circuit of a pixel of the embodiment shown in FIG. 1.

A liquid crystal display device displays an image using optical anisotropy and polarizability of liquid crystal. The liquid crystal has a thin and long molecular structure, optical anisotropy having directional arrangement, and polarizability direction of molecular arrangement that is changed according to a size of liquid crystal when the liquid crystal is put in an electric field.

A liquid crystal display device includes a liquid crystal display panel by bonding a first substrate (array substrate) with a second substrate (color filter substrate), which face each other and have a liquid crystal layer interposed therebetween, and on which a pixel electrode and a common electrode are formed. Arrangement direction of liquid crystal molecules is controlled by changing electric field between the electrodes, and an image may be displayed using changed light transmission.

To this end, as illustrated in FIG. 1, a liquid crystal display device 1 has a structure in which a first substrate 11 as an array substrate and a second substrate 61 as a color filter substrate are bonded to each other (e.g., with a liquid crystal layer 90 interposed therebetween). The lower first substrate 11 includes a plurality of gate lines (not shown) and data lines 30, which are arranged vertically and horizontally, and thin film transistors Tr are provided at crossing regions of the gate lines and the data lines to be coupled to pixel electrodes 50 formed on pixels P one by one.

In the present embodiment, storage lines (not shown) are alternately disposed between the gate lines to transmit hold signals to the respective pixels P.

The gate lines and the storage lines are arranged in a first direction (for example, an X-axis direction) and the data lines 30 are arranged in a second direction (for example, a Y-axis direction) crossing the first direction.

For example, as illustrated in FIG. 2, a pixel coupled to i^{th} gate line Gᵢ and j^{th} data line Dⱼ includes a thin film transistor Tr coupled to the gate line Gᵢ and the data line Dⱼ, a liquid crystal capacitor Clc coupled to the thin film transistor Tr, and a storage capacitor Cst coupled to the thin film transistor Tr and an i^{th} storage line Sᵢ.

Referring to I=IG. 1 again, the thin film transistor Tr includes a gate electrode 15 coupled to a gate line (not shown), a source electrode 35 and a drain electrode 33 formed on an upper layer or a lower layer with respect to the gate electrode 15, and a semiconductor layer 23 formed between the gate electrode 15 and the source/drain electrodes 33 and 35. Here, the semiconductor layer 23 includes an active layer 23a and an ohmic contact layer 23b.

In addition, a gate insulating layer 20 is formed between the gate electrode 15 and the semiconductor layer 23, a protecting layer 40 is formed on the source/drain electrodes 33 and 35, and a contact hole 43 for exposing a region of the source electrode 35 is formed in the protecting layer 40.

A pixel electrode 50 is formed on the protecting layer 40 to be coupled to the source electrode 35 through the contact hole 43 and receives a data signal from the thin film transistor Tr.

The liquid crystal capacitor Clc takes the pixel electrode 50 and a common electrode 70 as two terminals and the liquid crystal layer 90 between the two electrodes 50 and 70 serves as a dielectric.

The storage capacitor Cst is formed by first and second electrodes (not shown) and an insulating layer (for example, the gate insulating layer 20) between the first and second electrodes. The first electrode or the second electrode of the storage capacitor Cst is realized by the storage lines Sᵢ or is electrically coupled to the storage lines Sᵢ.

The upper second substrate 61 facing the first substrate 11 is disposed to face the first substrate 11 and includes a black matrix 63 formed on a surface facing the pixel electrode 50 that is formed on the first substrate 11, a color filter 66 (e.g., formed on the surface facing the first substrate 11), and the common electrode 70 (e.g., formed on the color filter 66).

The black matrix 63 is in the form of a grid surrounding respective pixel regions P to screen or block non-displaying region where the lines (e.g., data lines, gate lines, storage lines) and the thin film transistor Tr are formed.

The color filter 66 includes red, green, and blue color filter patterns 66a, 66b, and 66c, respectively, that are repeatedly sequentially arranged to correspond to respective pixels P.

The common electrode 70 is formed on an entire front surface of the second substrate 61 on which the black matrix 63 and the color filter 66 are formed. The common electrode 70 is made of transparent conductive electrode material such that light may transmit therethrough from a lower side.

Here, an over-coating layer may be formed between the color filter 66 and the common electrode 70.

In addition, a first polarizing plate 80 and a second polarizing plate 82 are attached to outer surfaces of the first substrate 11 and the second substrate 61, respectively, and a window 190 as a transparent substrate is attached to the polarizing plate 82 disposed in the direction where an image is displayed. The window 190 may be attached to the second polarizing plate 82 by a transparent adhesive layer 192.

An image displaying operation of the liquid crystal display device 1 having the above-mentioned structure will be described as follows.

First, when a gate signal is applied to the gate electrodes 15 of the thin film transistors Tr provided on the respective pixels P, the active layers 23a are activated and the source electrode 35 receives a data signal applied from the data line 30 coupled to the drain electrode 33, and through the drain electrode 33 coupled to the source electrode 35 through the lower activating layer 23a.

At this time, since the source electrode 35 is electrically coupled to the pixel electrode 50 through the contact hole 43, a voltage of the data signal is applied to the pixel electrode 50 and is stored in the storage capacitor Cst.

Therefore, according to a difference (e.g., a difference voltage) between the voltage applied to the pixel electrode 50 and the voltage applied to the common electrode 70, arrangement of liquid crystal molecules between the pixel electrode 50 and the common electrode 70 is controlled so that light transmission from a backlight 300 is controlled. Then, light of brightness corresponding to the data signal is emitted from the respective pixels P so that an image (e.g., a predetermined image) is displayed.

However, the liquid crystal display device 1 according to the present embodiment is a touch screen panel integrated liquid crystal display device in which a plurality of sensor electrodes 72 are formed on a rear {e.g., outer) surface of the second substrate 61 (e.g., facing the surface on which the common electrode 70 is formed).

The sensor electrodes 72 are provided to sense a touch (e.g., contact with the touch screen panel) and are made of patterns of transparent material, such that light may be transmitted therethrough from the lower side.

For example, the sensor electrodes 72 of the present embodiment extend in the first direction (for example, X-axis direction) and include a plurality of transparent pairs having a plurality of incisions (e.g., gaps) arranged in the second direction (for example, Y-axis direction) crossing the first direction.

In the touch screen panel integrated liquid crystal display device according to the present embodiment, the common electrode 70 formed on an entire front surface of the second substrate 61 is used as a driving electrode of the touch screen panel, and alternating common voltage is supplied to the common electrode 70.

That is, in the touch screen panel integrated liquid crystal display device according to the present embodiment, the liquid crystal display panel is driven in an inversion method in which the common voltage swings (e.g., varies) between the first voltage and the second voltage, and the touch screen panel is (e.g., is realized into) a mutual capacitive touch screen panel for sensing a touch position by detecting change of capacitance applied to the sensor electrode 72 when a voltage level of the common voltage is changed.

Therefore, since only a receiving electrode (the sensor electrodes of the present embodiment as an Rx electrode) is formed without an additional driving electrode as a transmitting electrode (Tx electrode) of the touch screen panel, the electrode structure of the touch screen panel is simplified so that mask process is reduced and simplified, and productivity is improved.

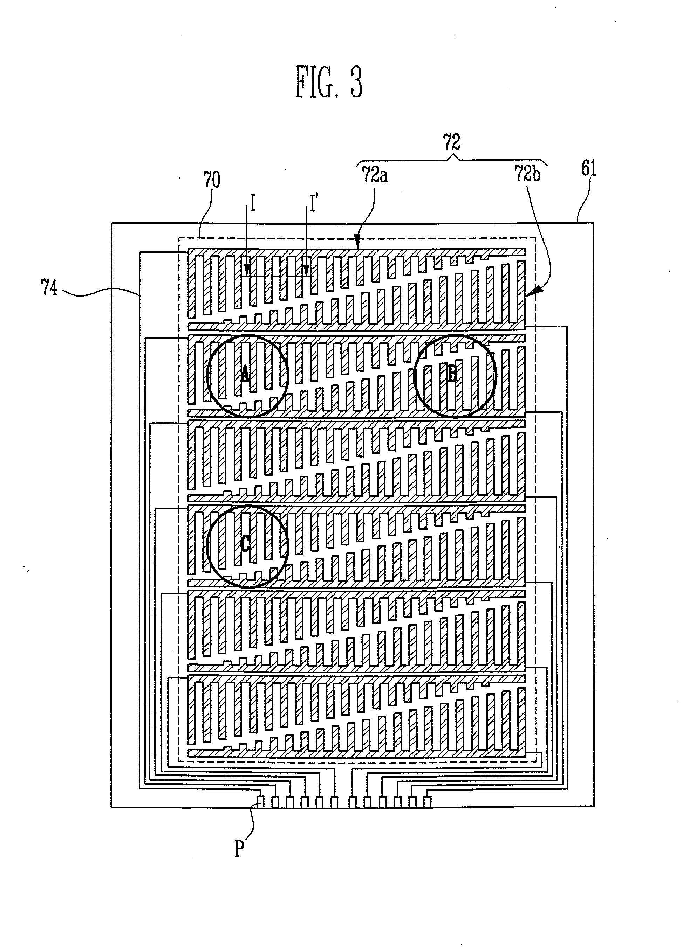

The above-mentioned features of the present embodiment, that is, a method of sensing the touch position by using the structure and shapes of the sensor electrodes 72, the common electrode 70, and the sensor electrodes 72 as a transmitting electrode and a receiving electrode of the touch screen panel, respectively, will be described in detail with reference to FIGS. 3 to 5B as follows.

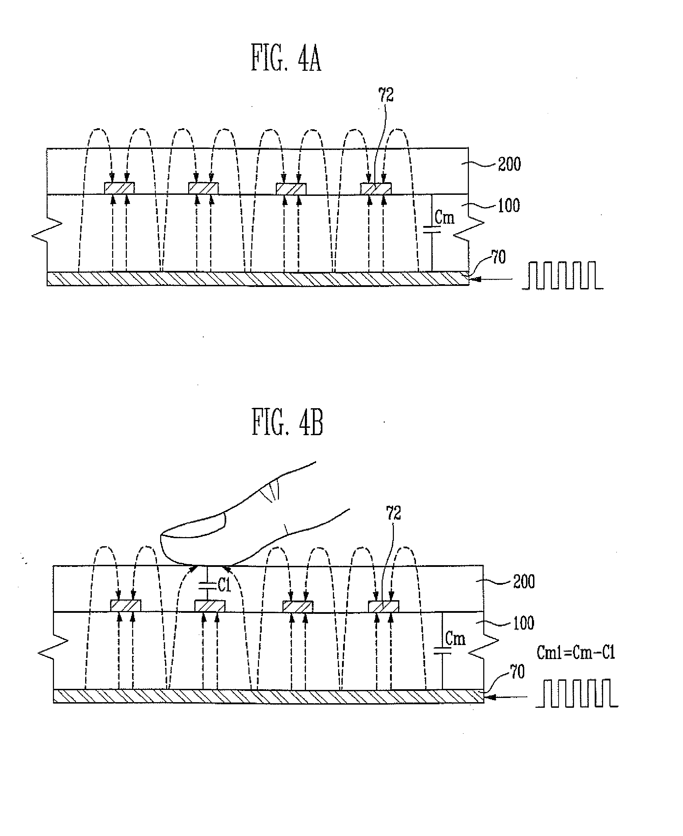

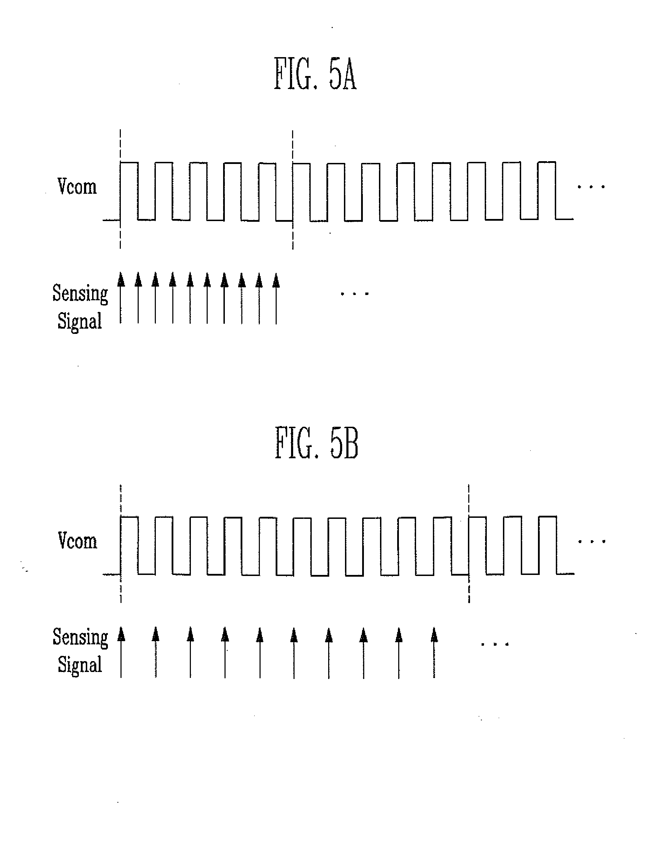

FIG. 3 is a plan view schematically illustrating an example of a common electrode and a sensor electrode of the embodiment shown in FIG. 1. FIG. 4A is a sectional view illustrating an electric field generated between a common electrode and a sensor electrode when a touch input is not provided. FIG. 4B is a sectional view illustrating an electric field generated between a common electrode and a sensor electrode when a touch input is provided. FIGS. 5A and 5B are timing diagrams schematically illustrating embodiments of a driving signal of the touch screen panel.

Firstly, referring to FIG. 3, the common electrode 70 is wholly formed on one surface (for example, a rear surface) of the second substrate 61, and the plurality of sensor electrodes 72 are patterned on the other surface of the second substrate 61. Detecting lines 74 for sensing change of the capacitance are coupled to the respective sensor electrodes 72, and the detecting lines 74 are coupled to an external driving circuit through a pad P.

For example, in the present embodiment, the plurality of sensor electrodes 72 extends in the first direction (for example, X-axis direction) and include a plurality of transparent pairs having a plurality of teeth of comb-shaped incisions (e.g., thereby forming a plurality of fingers, protrusions, or teeth of increasing or decreasing height with gaps therebetween) arranged in the sensor electrode 72 in the second direction (for example, Y-axis direction) crossing the first direction. The comb-shaped incisions and resulting protrusions may be replaced by other formations (e.g. corrugations) in alternative embodiments, providing the direction of the formations generally crosses that of the sensor electrodes.

As an example of the patterns of the sensor electrodes 72, each of the transparent pairs may include a first pattern 72a extending from a first end (for example, a left end) to a second end (for example, a right end) opposite the first end in the first direction while width is gradually decreased, and a second pattern 72b corresponding to the first pattern 72a and extending from the first end to the second end in the first direction while width is gradually increased.

For example, the first and second patterns 72a and 72b may have a triangular shape that is symmetrical to the other (point symmetry).

In addition, the transparent patterns, that is, the first and second patterns 72a and 72b, include a plurality of incisions formed therein, and, for example, the incisions may be formed in the first and second patterns 72a and 72b at uniform intervals, respectively. However, the present invention is not limited thereto and positions and shapes of the incisions may be changed or modified in various forms.

That is, the transparent pairs of the sensor electrodes 72 are arranged symmetrically and may be triangular pattern pairs in which teeth of comb-shaped incisions are formed.

As such, when the plurality of incisions are formed in the sensor electrodes 72, fringe field against the common electrode 70 is increased at regions where the incisions are formed, and the touch sensitivity is enhanced.

Since the common electrode 70 for receiving an alternating current common voltage also serves as a transmitting electrode for driving the touch screen panel, the sensor electrodes 72 form only the receiving electrodes, and the electrode structure for realizing the touch screen panel is simplified.

In addition, the sensor electrodes 72 of the present embodiment are not implemented by patterns coupling units that cross each other like a diamond pattern, but are implemented by triangular transparent pairs without crossing points between the sensor electrode 72, and are alternately arranged on a same plane.

Therefore, the electrode structure of the touch screen panel is simplified, and mask processes for forming the sensor electrodes 72 are reduced so that productivity is maximized.

In addition, the plurality of incisions are formed in the respective sensor electrodes 72 so that fringe field against the common electrode 70 is increased, and excellent touch sensitivity may be achieved.

In addition, since the touch screen panel and the liquid crystal display panel are integrated with each other, overall thickness is reduced, and visibility of an image from the liquid crystal display panel is improved.

Hereinafter, an operating principle of a touch screen panel of a touch screen panel integrated liquid crystal display device according to the present embodiment will be described with reference to FIGS. 4A and 4B. For the convenience sake, in FIGS. 4A and 4B, a dielectric material (for example, the second substrate) between the common electrode 70 and the sensor electrode 72 are simply depicted and assigned with a reference numeral 100, and dielectric material on the sensor electrodes 72 are simply depicted and assigned with a reference numeral 200.

As illustrated in FIG. 4A, mutual capacitance Cm is formed between the common electrode 70 and the sensor electrodes 72 when a touch input is not provided. At this time, the mutual capacitance Cm is generated when the common voltage is applied to the common electrode 70, and electric field lines are generated by the fringe field in the incisions as well as in regions where the common electrode 70 and the sensor electrodes 72 are directly overlapped with each other.

When the alternating current common voltage is supplied to the common electrode 70, coupling of a capacitor is generated when the voltage level of the common voltage is changed (rising time and falling time, or modifying time), and the voltage of the sensor electrodes 72 is changed corresponding to the voltage change of the common voltage.

At this time, the voltage corresponding to the mutual capacitance generated by the common voltage applied to the common electrode 70 is sensed by the detecting lines 74 (shown in FIG. 3) coupled to the respective sensor electrodes 72.

Meanwhile, as illustrated in FIG. 4B, when a touch input tool, such as a finger, makes capacitance change by contact, the electric field lines between the common electrode 70 and the sensor electrodes 72 are blocked at the time of the contact, and the mutual capacitance is changed.

In more detail, the touch input tool may be an object having a volume and contact area sufficient to cause a change of capacitance. For example, a finger is a low impedance object having AC capacitance C1 (see FIG. 4B) from the sensor electrodes 72 to human body, which has self-capacitance of about 200pF against ground, which is much greater than C1.

When a finger is touched (e.g., makes contact at a touch point), and the electric field lines between the common electrode 70 and the sensor electrode 72 at the touch point are blocked, the electric field lines are branched into ground (e.g., grounded) via a capacitance path inherent in the finger and the human body. The capacitance Cm at normal state when the touch input is not provided is decreased as much as C1 (e.g., decreased by C1) (Cm1 = Cm - C1).

The change of the mutual capacitance consequently makes voltage delivered to the sensor electrodes 72 positioned at the touch point.

Therefore, at the time when the voltage level of the common voltage applied to the common electrode 70 is changed, when the voltage of the sensor electrodes 72 is measured through the detecting lines 74 coupled to the respective sensor electrodes 72 to detect the change of the mutual capacitance, it is determined whether the touch input is generated and the position thereof.

In more detail, for determining the touch position with reference to FIG. 3, an X-coordinate of the touch point is determined by a charge-sharing between the transparent pairs 72a and 72b, and multiple touches may be sensed.

In more detail, for example, at an A point and a B point having the same Y-coordinate, first at the A position, a contact area of the first pattern 72a is greater than the contact area of the second pattern 72b so that the change of the mutual capacitance by the touch input is relatively large at the first pattern 72a.

On the contrary, at the B point, the contact area of the second pattern 72b is greater than the contact area of the first pattern 72a so that the change of the mutual capacitance by the touch input is relatively large at the second pattern 72b.

Therefore, based on the transparent pattern pairs 72a and 72b where the change of the mutual capacitance is generated by the touch input, the changes of the mutual capacitance of the first pattern 72a and the second pattern 72b are compared with each other to determine an X-coordinate of the touch point.

In addition, with respect to a Y-coordinate, same Y-coordinates are given to the transparent pairs 72a and 72b, and the Y-coordinate is determined according to the positions of the transparent pairs 72a and 72b. Therefore, when the transparent pairs 72a and 72b are where the changes of the mutual capacitance are generated by the touch input, the Y-coordinate may be directly determined.

Meanwhile, in the present embodiment, although an example provides that the sensor electrodes 72 formed by the transparent pairs 72a and 72b form patterns extending in the X-axis direction, the arrangement direction may be modified by patterns in which the sensor electrodes extend in another direction, such as the Y-axis direction.

In addition, in the touch screen panel integrated liquid crystal display device according to the present embodiment, since the common electrode 70 used as the driving electrode of the touch screen panel is formed wholly on the second substrate 61 (e.g., on an entire surface of the second substrate 61), when the alternating current common voltage is supplied to the common electrode 70, the voltage change by coupling is generated in all the sensor electrodes 72 at the time the common voltage is supplied.

Therefore, instead of detecting the change of capacitance by a method of sequentially scanning the respective sensor electrodes 72, a method of detecting change of capacitance of all the sensor electrodes 72 at the same time (e.g., approximately the same time) for a sensing period (e.g., a predetermined sensing period) corresponding to the changed time of the common voltage may be employed, and thus, high rate driving may be possible. However, the present invention is not limited thereto, and it is possible to scan the sensor electrodes 72 by lines (e.g., line by line) to detect the change of capacitance.

In addition, the mutual capacitive touch screen panel is achieved using the common voltage as the driving signal of the liquid crystal display panel for displaying an image, so that noise from the liquid crystal display panel is minimized, and touch sensitivity may be improved.

Meanwhile, to achieve the mutual capacitive touch screen panel using the alternating current common voltage, the change of capacitance at the respective sensor electrodes 72 at the time when the common voltage is changed should be detected. Therefore, the sensing signal for detecting the change of capacitance through the detecting lines 74 coupled to the sensor electrodes 72 should correspond to a time when the common voltage is changed and should be synchronized with the common voltage.

To this end, for example, a source driver IC for driving the liquid crystal display panel supplies the sensing signal for driving the touch screen panel so that the liquid crystal display panel and the touch screen panel may be driven with one IC.

At this time, a driving frequency of the touch screen panel may be modified in various forms by changing the number (e.g., the frequency of a sensing signal) or time of sensing.

For example, as illustrated in FIG. 5A, the sensing signal is supplied to be synchronized with (e.g., have the same frequency as) the rising time and the falling time of the common voltage so that the touch screen panel may be driven at a high rate.

In addition, as illustrated in FIG. 5B, the sensing signal may be supplied to be synchronized with every rising time (or may be supplied every falling time) of the common voltage to drive the touch screen panel.

In addition, instead of driving the touch screen panel every rising time and/or falling time of the common voltages distributed in one frame, the sensing signal may be supplied to be synchronized with a selected changed time of the common voltage (e.g., at a predetermined interval) so that the touch screen panel may be driven.

Meanwhile, instead of determining the touch position by driving once, the change of capacitance is detected several times, and an average thereof is calculated to determine the touch position. In this case, noise may be effectively removed so that reliability may be enhanced.

For example, as illustrated in FIGS. 5A and 5B, when the change of capacitance is detected by supplying the sensing signal ten times, and an average thereof is calculated, the touch position may be finally determined. The sensing times for determining one touch position may be modified in various forms.

The present invention has been described in connection with certain embodiments, it is to be understood that the invention is not limited to the disclosed embodiments, but, on the contrary, is intended to cover various modifications and equivalent arrangements included within the scope of the appended claims, and equivalents thereof.

## Claims

1. A touch screen panel integrated liquid crystal display device comprising:
a first substrate;
a plurality of pixels on the first substrate and comprising respective pixel electrodes;
a second substrate facing the first substrate;
a common electrode on a first surface of the second substrate facing the pixel electrodes;
a plurality of transparent pairs of sensor electrodes on a second surface of the second substrate; the said sensor electrodes each extending in a first direction and having a plurality of formations extending in a second direction crossing the first direction; and
a liquid crystal layer between the first substrate and the second substrate, wherein the touch screen panel integrated liquid crystal display device is configured to sense a touch position by detecting a change of capacitance applied to the sensor electrodes corresponding to an alternating current common voltage applied to the common electrode.

2. A touch screen panel integrated liquid crystal display device as claimed in claim 1, wherein each of the transparent pairs comprises:
a first pattern extending from a first end to a second end opposite the first end in the first direction, a width of the first pattern gradually decreasing toward the second end; and
a second pattern extending from the first end to the second end in the first direction, a width of the second pattern gradually increasing toward the second end.

3. A touch screen panel integrated liquid crystal display device as claimed in claim 2, wherein the first and second patterns each have a triangular shape and are substantially symmetrical to each other.

4. A touch screen panel integrated liquid crystal display device as claimed in any preceding claim, wherein the formations are formed in the respective transparent patterns and are substantially uniformly spaced.

5. A touch screen panel integrated liquid crystal display device as claimed in any preceding claim, wherein the formations are generally comb-shaped.

6. A touch screen panel integrated liquid crystal display device as claimed in any preceding 1, configured to supply a sensing signal for detecting the change of capacitance through detecting lines coupled to the sensor electrodes, at a time when the alternating current common voltage is changed.

7. A touch screen panel integrated liquid crystal display device as claimed in claim 6, wherein the device is configured to supply the sensing signal in synchronization with a rising time and a falling time of the alternating current common voltage.

8. A touch screen panel integrated liquid crystal display device as claimed in claim 6, wherein the device is configured to supply the sensing signal in synchronization with a rising time or a falling time of the alternating current common voltage.

9. A touch screen panel integrated liquid crystal display device as claimed in claim 6, wherein the device is configured to supply the sensing signal in synchronization with modifying times of the alternating current common voltage distributed at regular intervals in one frame.

10. A touch screen panel integrated liquid crystal display device as claimed in claim 1, configured such that the change of capacitance applied to the sensor electrodes is detected concurrently through all detecting lines coupled to respective sensor electrodes during a sensing time corresponding to a time when the alternating current common voltage is changed.

11. A touch screen panel integrated liquid crystal display device as claimed in any preceding claim, wherein the sensor electrodes are alternately arranged.

12. A touch screen panel integrated liquid crystal display device as claimed in any preceding claim, wherein the formations comprise at least one of protrusions, incisions, fingers, teeth or corrugations.
